# EUROPEAN PATENT SPECIFICATION

(11) **EP 1 511 112 B1**
(45) Date of publication and mention of the grant of the patent: **14.12.2016**
(21) Application number: 04254403.1
(22) Date of filing: 23.07.2004
(51) Int. Cl.: H01M 8/10, H01M 8/02, H01M 8/22

(54) **Polymer nanocomposite membrane and fuel cell using the same**
Polymer-Nanoverbundmembran und Brennstoffzelle diese enthaltend
Membrane polymère nanocomposite et pile à combustible utilisant celui ci

(30) Priority: 29.08.2003 KR 2003060436
(43) Date of publication of application: 02.03.2005
(73) Proprietor: Samsung SDI Co., Ltd., Suwon-si, Gyeonggi-do (KR)
(72) Inventor: Kim, Hae-kyoung, Gangnam-gu Seoul (KR); Lee, Jae-sung Dept. of Chem.Engineering, Nam-gu, Pohang-si Gyeongsangbuk-do (KR); Rhee, Cahg-houn Dept. of Chem.Engineering, Nam-gu, Pohang-si Gyeongsangbuk-do (KR); Chang, Hyuk, Bundang-gu, Seongnam-si Gyeonggi-do (KR)
(74) Representative: Zijlstra, Robert Wiebo Johan

(56) References cited:
- EP-A- 1 284 518
- EP-A- 1 309 025
- WO-A-00/74827
- WO-A-96/29752
- WO-A-97/19480
- WO-A-99/54389
- JUNG D H ET AL: "Preparation and performance of a Nafion<(>R)/montmorillonite nanocomposite membrane for direct methanol fuel cell" JOURNAL OF POWER SOURCES, ELSEVIER SEQUOIA S.A. LAUSANNE, CH, vol. 118, no. 1-2, 25 May 2003 (2003-05-25), pages 205-211, XP004425683 ISSN: 0378-7753
- PARK Y-I ET AL: "Proton exchange nanocomposite membranes based on 3-glycidoxypropyltrimethoxysilane, silicotungstic acid and alpha-zirconium phosphate hydrate" SOLID STATE IONICS, NORTH HOLLAND PUB. COMPANY. AMSTERDAM, NL, vol. 145, no. 1-4, 1 December 2001 (2001-12-01), pages 149-160, XP004310763 ISSN: 0167-2738
- HE R ET AL: "Proton conductivity of phosphoric acid doped polybenzimidazole and its composites with inorganic proton conductors" JOURNAL OF MEMBRANE SCIENCE, ELSEVIER SCIENTIFIC PUBL.COMPANY. AMSTERDAM, NL, vol. 226, no. 1-2, 1 December 2003 (2003-12-01), pages 169-184, XP004473659 ISSN: 0376-7388

## Description

The present invention relates to a polymer nanocomposite membrane and a fuel cell adopting the same, and more particularly, to a polymer nanocomposite membrane having a reduced permeability of water or methanol and a fuel cell having improved energy density and fuel efficiency by using the same.

Direct methanol fuel cells (DMFC) using methanol solution as liquid fuel are a source of future clean energy that can replace fossil energy. Also, a DMFC is workable at room temperature and can be miniaturized and sealed. Thus, the DMFC has a very wide applicability including zero-emission vehicles, home power generating systems, mobile communication equipment, medical appliance, military equipment, aerospace industrial equipment, as well as in the field of portable electrical devices.

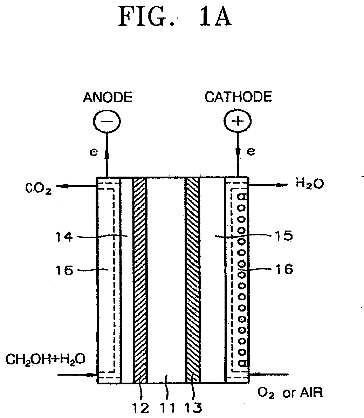

The DMFC is a power generating system, which produces direct current by an electrochemical reaction of methanol and oxygen. A basic structure of the DMFC is shown in FIG. 1A.

Referring to FIG. 1A, the DMFC includes a hydrogen ionic conductive membrane 11 interposed between an anode and a cathode.

The thickness of the hydrogen ionic conductive membrane 11 is 50-200 µm and is mainly made of a solid polymer electrolyte. The anode and the cathode includes catalyst layers 12 and 13 formed on a cathode supporting layer 14 and an anode supporting layer 15, respectively. The supporting layers 14 and 15 are made of carbon cloth or carbon paper and their surfaces are treated so that water to be transferred to the hydrogen ionic conductive membrane 11 and water generated by the reaction can easily pass therethrough while supplying a reaction gas or liquid. In FIG. 1A, a reference numeral 16 represents a bipolar plate having grooves for injecting gas, which acts as a current collector.

When a reaction fuel is supplied to the DMFC, an oxidation reaction occurs in the anode, wherein methanol and water are converted into carbon dioxides, hydrogen ions, and electrons. During this process, the hydrogen ions are transferred to the cathode via the hydrogen ionic conductive membrane 11.

On the other hand, a reduction reaction occurs in the cathode, wherein oxygen molecules in the air receive the electrons to be converted into oxygen ions. Then, the oxygen ions react with the hydrogen ions from the anode to be converted into water molecules.

In the above DMFC, the hydrogen ionic conductive membrane 11 is a solid polymer membrane and acts as separator of fuels to be supplied to each of the anode and the cathode while transferring the hydrogen ions produced in the anode to the cathode.

Nafion, produced by Dupont, is mainly used as the solid polymer membrane. It is known that since the solid polymer membrane is formed of a polymer which has a hydrophobic backbone and hydrophilic group-containing side chains, it can contain water. The hydrogen ions migrate through cluster formed by water which is contained in the solid polymer membrane. Therefore, it is preferable that in order to effectively transfer the hydrogen ions, solid polymer membranes having an increased content of water to increase hydrogen ion conductivity be used.

In a DMFC using aqueous methanol solution as fuel, a swelling phenomenon of a solid polymer membrane occurs depending on the concentration of methanol in the aqueous methanol solution. Due to the swelling phenomenon, the fuel which is not oxidized by an electrochemical reaction migrates from the anode to the cathode through the solid polymer membrane, thereby lowering the performance by mixed potential in the cathode together with a waste of the fuel.

In order to solve the above problem, it is necessary to develop a solid polymer membrane for DMFCs.

In forming a solid polymer membrane for DMFCs, a method of lowering the permeability of aqueous methanol solution by using rigid and heat-resistant polymers was proposed in US Patent Nos. 5,795,496, 6,194,474 and 6,510,047. This method can remarkably lower the permeability of methanol. However, since this method considerably reduces the ionic conductivity of the polymer membrane, the performance, such as power density, of the fuel cell is considerably lowered.

As another method for forming a solid polymer membrane for DMFCs, a method of dispersing inorganic particles in a polymer membrane was proposed in US Patent No. 5,919,583. According to this method, the hydrogen ionic conductivity is lowered due to the addition of inorganic materials.

WO 00/74827 discloses a composite membrane consisting of an ionomer and an inorganic optionally functionalized phyllosilicate. The ionomer can be an anion or a cation exchange polymer, a polymer containing both anion and cation exchange groups or a blend of these.

J Power Sources 118, 205 (2003) describes Nafion/montmorillonite nanocomposite membranes for direct methanol fuel cells.

Solid State Ionics 145, 149 (2001) also describes nanocomposite membranes based on 3-glycidoxypropyltrimethoxysilane, silicotungstic acid and α-zirconium phosphate hydrate.

EP A 1 309 025 describes a polymer electrolyte, and its use in a fuel cell, comprising an ionic conductive polymer membrane, a porous support having nano-sized pores and inorganic conductive nano-particles including an ionic conductive material impregnated into the support.

EP A 1 284 518 describes a reinforced composite ionic conductive polymer membrane which has a porous support, an ion-exchange polymer and a reinforcing agent which impregnates the porous support wherein the reinforcing agent includes a moisture retentive material and/or a catalyst for facilitating oxidation of hydrogen. Use of the membrane in a fuel cell providing improved efficiency is also described.

J. Membrane Sci. 226, 169 (2003) describes a study of phosphoric acid doped polybenzimidazole and composite membranes containing inorganic proton conductors including zirconinium phosphate, phosphotungstic acid and silicotungstic acid. The study concludes that conductivity of the membranes is dependent on the acid doping level, relative humidity and temperature.

The present invention provides a solid polymer membrane that, compared with a conventional Nafion membrane, has a slightly reduced permeability of methanol while possessing the same or higher ionic conductivity, a material for forming the same, and a method of preparing the same.

The present invention also provides a fuel cell having improved fuel efficiency by using the solid polymer membrane as described above.

According to an aspect of the present invention, there is provided a hydrogen ionic conductive inorganic material having a layered structure, wherein a moiety containing a functional group with hydrogen ionic conductivity is introduced between layers of the inorganic material having a nano-sized interlayer distance, wherein the moiety is at least one selected from a sulfonic acid group containing moiety, which is a silicate connected to the inorganic material through an ether bond (-O-) and has a free thiol group at a terminal, a carboxylic acid group containing moiety, and a H₃PO₄ containing moiety.

According to another aspect of the present invention, there is provided a method of preparing a hydrogen ionic conductive inorganic material having a layered structure, the method including: reacting an inorganic material having a nano-sized interlayer distance with an alkoxysilane containing a hydrolysable alkoxy group and a free thiol group to form a reaction product; and conducting an oxidation by adding an oxidizing agent to the reaction product, followed a protonation.

According to another aspect of the present invention, there is provided a polymer nanocomposite membrane including a reaction product of a hydrogen ionic conductive inorganic material having a layered structure and a conductive polymer.

According to another aspect of the present invention, there is provided a method of preparing a polymer nanocomposite membrane, the method including: reacting a mixture of a hydrogen ionic conductive inorganic material having a layered structure and a conductive polymer at the temperature of 60-150°C, followed by forming a membrane.

According to another aspect of the present invention, there is provided a fuel cell using a polymer nanocomposite membrane which includes a reaction product of a hydrogen ionic conductive inorganic material having a layered structure and a conductive polymer.

The above and other features and advantages of the present invention will become more apparent by describing in detail exemplary embodiments thereof with reference to the attached drawings in which:
FIG. 1A is a plan view of a structure of a direct methanol fuel cell;
FIG. 1B schematically shows a process of preparing a hydrogen ionic conductive inorganic material having a layered structure according to an embodiment of the present invention;
FIG. 2 is a graph showing the permeability of each of water and methanol in the polymer nanocomposite membrane of Examples 8-10 according to the present invention and the polymer membrane used in Comparative Example 1;
FIG. 3 is a graph showing the ionic conductivity of a polymer nanocomposite membrane of Examples 8 to 10 according to the present invention;
FIG. 4 is a graph showing the energy density in the fuel cells of Example 11 according to the present invention and Comparative Example 1;
FIG. 5 is a cross-sectional view of a polymer nanocomposite membrane of Example 11 according to the present invention, as analyzed via a transmission electron microscope (TEM).
FIG. 6 is a graph showing the performance of membrane and electrode assemblys (MEAs) of Example 11 according to present invention and Comparative

### Example 1; and

FIG. 7 is a graph showing X-ray diffraction (XRD) analysis results of a polymer nanocomposite membrane of Example 11 according to the present invention and a montmorillonite.

In a hydrogen ionic conductive inorganic material having a layered structure according to an embodiment of the present invention, a moiety containing a functional group with hydrogen ionic conductivity is introduced between layers of an inorganic material having a nano-sized interlayer distance.

The moiety containing a functional group with hydrogen ionic conductivity is at least selected from the group consisting of a sulfonic acid group containing moiety, carboxylic acid group containing moiety, H₃PO₄ containing moiety.

The sulfonic acid group containing moiety is a silicate connected to the inorganic material via ether bond and has a free thiol group at the terminal. The moiety containing a sulfonic acid group is obtained by hydrolysis of alkoxysilanes having a hydrolysable alkoxy group and a thiol group, dehydration and polycondensation of the hydrolyzed product.

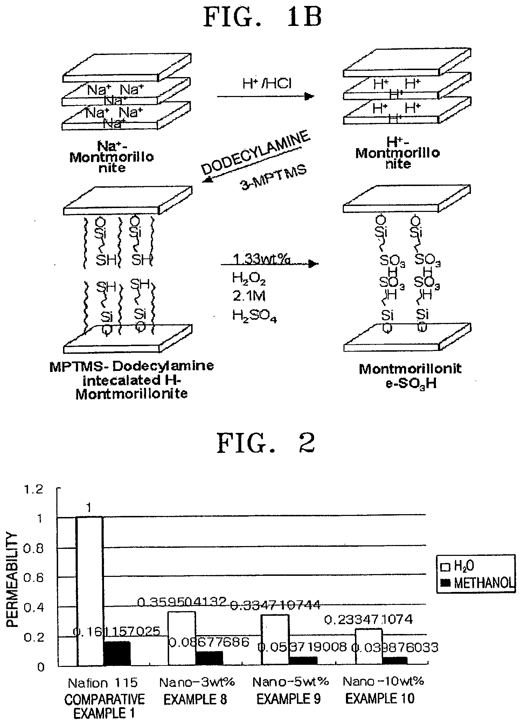

A process of preparing the hydrogen ionic conductive inorganic material is schematically shown in FIG. 1B. For example, a montmorillonite is used as the inorganic material having nano-sized interlayer distance and a moiety containing sulfonic acid group is used as the moiety containing a functional group with hydrogen ionic conductivity.

Referring to FIG. 1B, the montmorillonite is treated with acid to replace Na⁺ present in between layers with H⁺. Then, the resulting product is reacted with a alkoxysilane, such as 3-mercapto prophyl trimethoxysilane (3-MPTMS), to introduce a moiety connected to one inner surface of the montmorillonite through ether bond and having a free thiol group at the terminal. Meanwhile, the resulting product may be reacted with a surfactant, such as dodecylamine, to widen the distance between montmorillonite layers before reacting with alkoxysilane.

After introducing a moiety connected to one inner surface of the montmorillonite through ether bond and having a free thiol group at the terminal, the resulting product is oxidized with an oxidizing agent and is protonated to convert the free thiol group at the terminal into a sulfonic acid group, thereby obtaining an inorganic material having hydrogen ionic conductivity.

Examples of the inorganic material having a nano-sized interlayer distance include, but are not limited to, montmorillonite, hydrated sodium calcium aluminium magnesium silicate hydroxide, pyrophyllite, talc, vermiculite, sauconite, saponite, nontronite, Amersite, Baileychlore, Chamosite, Clinochlore, Cookeite, Corundophilite, Daphnite, Delessite, Gonyerite, Nimite, Odinite, Orthochamosite, Penninite, Pannantite, Rhipidolite, prochlore, Sudoite, Thuringite, kaolinite, dickite and nacrite.

A method of preparing the hydrogen ionic conductive inorganic material having a layered structure is as follows.

First, an inorganic material having a nano-sized interlayer distance is pre-treated, for example, using an acid, and is reacted with an alkoxysilane having a hydrolysable alkoxy group and a free thiol group. Through the hydrolysis of the alkoxysilane, silicate, which is connected to one inner surface of the inorganic material via ether bond and has a free thiol group at the terminal, and dehydration and polycondensation of the hydrolysed product, is introduced between layers of the inorganic material.

The inorganic material having a nano-sized interlayer distance has the particle size of hundreds nano-size and the interlayer distance of at least of 0.1 nm, for example, 0.1 to 10 nm.

Examples of the alkoxysilane containing a hydrolysable alkoxy group and a thiol group include, but are not limited to, 3-mercapto propyl trimethoxysilane (3-MPTMS), 3-mercapto propyl methyl dimethoxysilane (3-MPDMS), or a mixture thereof. The content of an alkoxysilane is in the range of 0.1 to 1.0 mole based on 1 mole of the inorganic material having nano-sized interlayer distance. When the content of an alkoxysilane is lower than 0.1 mole, the inorganic material has too low ion exchange capacity (IEC). On the other hand, when the content of alkoxysilane is higher than 1.0 mole, the saturation thereof is excessive, thereby increasing processing cost.

The reaction of the inorganic material and the alkoxysilane may be carried out at 100 to 180°C. When the reaction temperature does not lie within the above range, the reactants may be decomposed or no reaction may occur.

In the reaction of the inorganic material and the alkoxysilane, a solvent capable of dissolving or dispersing the inorganic material is required. Examples of such solvent include toluene, hexane and DMF. The content of the solvent may be in the range of 50 to 150 parts by weight based on 100 parts by weight of the inorganic material.

On the other hand, in order to maintain an appropriate interlayer distance between the layers of the inorganic material and the acidity of the chemical reaction, the inorganic material may be pre-treated by adding a surfactant thereto, before reacting the inorganic material with the alkoxysilane. The surfactant includes any surfactant which can achieve above object, in particular non-ionic surfactant, examples thereof being dodecylamine, cetyltrimethylammonium bromide, dodecyltrimethylammonium bromide, tetrabutylammonium hydroxide, and a mixture of the foregoing surfactants. The content of the surfactant is in the range of 0.1 to 1.0 mole based on 1 mole of the inorganic material having nano-sized interlayer distance.

Then, the reaction product of the inorganic material and the alkoxysilane is reacted with an oxidizing agent and protonated to convert the free thiol group at the terminal into a sulfonic acid group. As a result, a hydrogen ionic conductive inorganic material having a layered structure is completed.

H₂O₂, K₂O₂, or BaO₂ is used as the oxidizing agent and its content is in the range of from 0.5 to 5 moles based on 1 mole of the inorganic material.

The oxidation is preferably carried out at a temperature of 25 to 60°C. When the temperature does not lie within the above range, oxidation does not occur or decomposition occurs.

When other precursor, for example, a precursor having a sulfonic group or a carboxylic group, or a substance which can be substituted with sulfonic group or carboxylic group through oxidation, is used instead of the alkoxysilane having a hydrolysable alkoxy group and a free thiol group, a carboxylic group and a phosphoric acid group, which have hydrogen ionic conductivity, may be introduced between layers of an inorganic material. Depending on proper use of such precursor, the conductivity and ion exchange capacity of the hydrogen ionic conductive inorganic material are determined.

The hydrogen ionic conductive inorganic material having a layered structure according to the present invention has the interlayer distance of 0.1 to 50 nm, the size of the inorganic material of 10 to 100 µm, and the ion exchange capacity (IEC) of 0.01 to 5 mmol/g. Here, the size of the inorganic material means for length of the inorganic material.

In the protonation, sulfuric acid, phosphoric acid or a alkylcarboxylic acid such a s acetic acid is added and stirred at room temperature for predetermined period.

The hydrogen ionic conductive inorganic material having a layered structure obtained according to the above process is then purified and dried, and thereafter used in forming a polymer nanocomposite membrane.

A polymer nanocomposite membrane according to the present invention is prepared through the reaction of the above hydrogen ionic conductive inorganic material and a conductive polymer. Specifically, the hydrogen ionic conductive material and a conductive polymer are rapidly mixed and stirred at a temperature of 60 to 150°C for 12 hours or longer, and then reacted. Although the reaction time may vary depending on the reaction temperature, the reaction is carried out for two days. When the reaction temperature is lower than 60°C, the reactivity of the polymer and the inorganic material decreases. On the other hand, when the reaction temperature is higher than 150°C, the inorganic material tends to decompose.

More particularly, the polymer nanocomposite membrane according to the present invention may be prepared by mixing the inorganic material and a conductive polymer in the predetermined ratio of mixing, and reacting at higher temperature and higher pressure (about 80°C and 1-5 atm) for 12 hours or longer in autoclave. Alternatively, the polymer nanocomposite membrane according to the present invention may be prepared by mixing the inorganic material and a conductive polymer solution, and then mixing for 30 minutes or longer through homogenizer, thereafter reacting at 60-150°C.

After completing the reaction of the hydrogen ionic conductive inorganic material with the conductive polymer, the reaction mixture is poured into a frame for polymer membrane and retained in the oven kept at a temperature of 40-150°C, in particular, 80-150°C, thereby obtaining a polymer nanocomposite membrane.

Examples of the conductive polymer include, but are not limited to, perfluorinated sulfonic acid polymer (for example, perfluorinated aliphatic sulfonic acid polymer or perfluorinated aromatic sulfonic acid polymer), sulfonated polyimide, sulfonated polyetherketone, sulfonated polystyrene, sulfonated polysulfone, and a combination of the foregoing polymers. IEP of the conductive polymer is in the range of 0.01-5 mmol/g.

The content of the conductive polymer is in the range of 1-20 parts by weight based on 100 parts by weight of the hydrogen ionic conductive inorganic material having a layered structure. When the content of the conductive polymer does not lie within the above range, the ability of forming a polymer membrane is lowered.

The polymer nanocomposite membrane prepared according to the above process has a thickness of 50-200 µm, which allows it to be used in a fuel cell.

The polymer nanocomposite membrane according to the present invention may be used as a hydrogen ionic conductive membrane in the fuel cell as shown in FIG. 1A.

When the polymer nanocomposite membrane is applied to a fuel cell, the most efficient perfomance may be obtained through a pre-treatment. The pre-treatment, which helps the polymer nanocomposite membrane sufficiently contain moisture and the activation be taken place well, is carried out by boiling it in deionised water for 2 hours or by boiling it in sulfuric acid for 2 hours and then boiling in deionised water.

A process of fabricating a membrane and electrode assembly for a fuel cell using the pre-treated polymer nanocomposite membrane is as follows. The term "membrane and electrode assembly (MEA)" herein refers to a structure that a hydrogen ionic conductive polymer membrane is located in the center, and a catalyst layer and an electrode are sequentially laminated on both sides thereof.

The MEA of the present invention is formed by locating an electrode, which has a catalyst layer, on both sides of the polymer membrane, and then joining it at higher temperature and higher pressure. Alternatively, the MEA of the present invention is formed by coating the polymer membrane with a catalyst metal occurring an electrochemical catalytic reaction, and then joining a fuel diffusing layer thereto.

The joining temperature and pressure are a temperature at which the hydrogen ionic conductive membrane is softened (in the case of Nafion, to about 125°C) and a pressure of 0.1 to 1.2 ton/cm², in particular, about 1 ton/cm². The electrode is a conductive carbon cloth or a carbon paper layer. Then, the MEA is provided with bipolar plates, respectively, on both sides thereof to complete a fuel cell. The bipolar plate has grooves for supplying fuel and acts as a current collector.

In the preparation of the MEA, Pt alone, or an alloy or a mixture of Pt and at least one of metal among Au, Pd, Rh, Ir, Ru, Sn and Mo is used as the catalyst.

The present invention will be described in greater detail with reference to the following examples. The following examples are for illustrative purposes and are not intended to limit the scope of the invention.

### Example 1

First, montmorillonite, which was one of inorganic materials having a layered structure, was used to prepare a hydrogen ionic conductive inorganic material as follows.

An amount of 150 ml of toluene was added to 500 ml round-bottom flask and purged with N₂, followed by adding 49 mmol of montmorillonite and stirring. Then, 24.50 mmol (4.63g) of 3-mercapto propyl trimethoxysilane was added to the mixture. The reaction mixture was mixed at room temperature for 1 hour, followed by raising the temperature thereof to 100°C and mixing for 24 hours. The reaction mixture was cooled, filtrated, and washed with ethanol, followed by drying in an oven controlled at 60°C.

The dried product was added in 100 ml flask containing 8.33 g of hydrogen peroxide, and then mixed at room temperature for 6 hours. After raising the temperature of the reaction mixture to 70°C, the reaction was carried out for 1 hour.

After completing the above reaction, the resulting product was filtrated, washed with water, and then dried at room temperature. Then, the dried product was poured in 10wt% aqueous solution of sulfuric acid and stirred at room temperature for 30 minutes, followed by filtrating, washing and drying to prepare a hydrogen ionic conductive inorganic material.

### Example 2

A hydrogen ionic conductive inorganic material was prepared in the same manner as in Example 1, except that before adding 24.50 mmol (4.63g) of 3-mercapto propyl trimethoxysilane to the reaction mixture, 24.5 mmol of dodecyl amine was further added to the reaction mixture.

### Example 3

A hydrogen ionic conductive inorganic material was prepared in the same manner as in Example 1, except that before adding 24.50 mmol (4.63g) of 3-mercapto prophyl trimethoxysilane to the reaction mixture, 24.5 mmol of cetyltrimethylammonium bromide was further added to the reaction mixture.

### Example 4

A hydrogen ionic conductive inorganic material was prepared in the same manner as in Example 1, except that before adding 24.50 mmol (4.63g) of 3-mercapto prophyl trimethoxysilane to the reaction mixture, 24.5 mmol of dodecyltrimethylammonium bromide was further added to the reaction mixture.

### Example 5

A hydrogen ionic conductive inorganic material was prepared in the same manner as in Example 1, except that before adding 24.50 mmol (4.63g) of 3-mercapto prophyl trimethoxysilane to the reaction mixture, 24.5 mmol of tetrabutylammonium hydroxide was further added to the reaction mixture.

### Example 6

0.03 g of the hydrogen ionic conductive inorganic material obtained from Example 3 was thoroughly mixed with 20g of 5wt% copolymer solution of tetrafluoroethylene and perfluoro-3,6-dioxa-4-methyl-7-octenesulfonyl fluoride and heated to 90°C, followed by vigorous stirring at a rate of 900 rpm. Then, the reaction mixture was stirred for 3 days and transferred to a frame for polymer membrane, followed by heating in an oven controlled at 130°C for 4 hours to prepare a polymer nanocomposite membrane.

### Example 7

0.03 g of the hydrogen ionic conductive inorganic material obtained from Example 3 was thoroughly mixed with 20g of 5wt% copolymer solution of tetrafluoroethylene and perfluoro-3,6-dioxa-4-methyl-7-octenesulfonyl fluoride solution. Then, the mixture was located in autoclave to react it at 90°C at 80 psi for 24 hours.

After completing the reaction, the resulting product was transferred to a frame for polymer membrane and heat-treated in an oven controlled at 130°C for 4 hours, thereby preparing a polymer nanocomposite membrane.

### Example 8

0.03 g of the hydrogen ionic conductive material obtained from Example 3 was thoroughly mixed with 20g of 5wt% copolymer solution of tetrafluoroethylene and perfluoro-3,6-dioxa-4-methyl-7-octenesulfonyl fluoride.
- Then, the mixture was stirred using a homogenizer at a rate of 10000 rpm for 30 minutes, and then the reaction was carried out at 90°C for 12 hours.

After completing the reaction, the resulting product was transferred to a frame for polymer membrane and heat-treated in an oven controlled at 130°C for 4 hours, thereby preparing a polymer nanocomposite membrane.

### Example 9

0.03 g of the hydrogen ionic conductive material obtained from Example 3 was thoroughly mixed with 20g of 3wt% copolymer solution of tetrafluoroethylene and perfluoro-3,6-dioxa-4-methyl-7-octenesulfonyl fluoride, followed by heating to 90°C and vigorous stirring at a rate of 900 rpm. Then, the reaction mixture was reacted for 3 days and transferred to a frame for polymer membrane, followed by heat-treating in an oven controlled at 130°C for 4 hours to prepare a polymer nanocomposite membrane.

### Example 10

0.03 g of the hydrogen ionic conductive material obtained from Example 3 was thoroughly mixed with 20g of 10wt% perfluorinated sulfonic acid solution, followed by heating to 90°C and vigorous stirring at a rate of 900 rpm. Then, the reaction mixture was reacted for 3 days and transferred to a frame for polymer membrane. Then, the frame was heat-treatied in an oven controlled at 130°C for 4 hours to prepare a polymer nanocomposite membrane.

### Example 11

The polymer nanocomposite membrane obtained from Example 8 was used to prepare a MEA. Then, the resulting MEA was used to prepare a direct methanol fuel cell, in which 2M methanol solution and air were used as fuel.

### Comparative Example 1

A commercial Nafion 115 membrane (available from Dupont) was used to prepare a MEA. Then, the resulting MEA was used to prepare a direct methanol fuel cell, in which 2M methanol solution and air were used as fuel.

The MEA prepared in the above Example 11 and Comparative Example 1 were applied to fuel cells to evaluate properties thereof as follows.

In the polymer nanocomposite membranes of Examples 8-10 and the polymer membrane used in Comparative Example 1, the permeability of water and methanol was measured. The permeability of water and methanol is shown in FIG. 2.

Referring to FIG. 2, it is apparent that the polymer nanocomposite membrane of Examples 8-10 has a lowered permeability compared to the polymer membrane of Comparative Example 1.

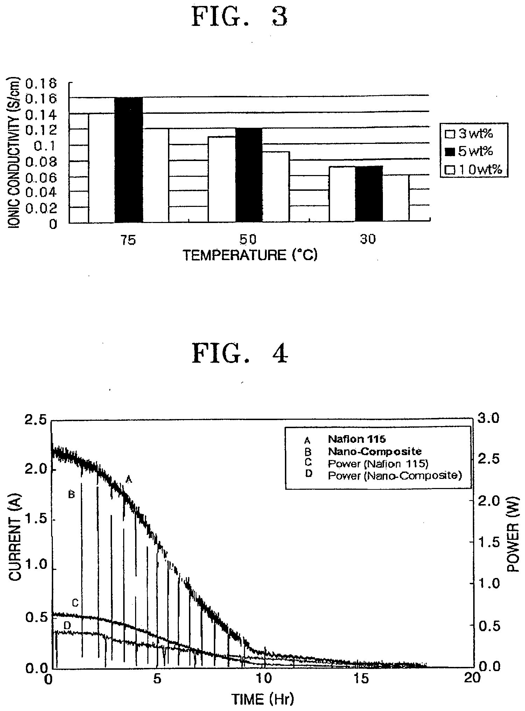

The ionic conductivity of the polymer membranes prepared in Examples 8-10 was measured using a 4-point probe method and the results were shown in FIG. 3.

As apparent from FIG. 3, the ionic conductivity of the polymer membranes according to the present invention is higher than 0.1 S/cm that is the ionic conductivity applicable to a fuel cell.

The energy density of the fuel cells prepared by using MEAs of Example 11 and Nafion 115 membrane of Comparative Example 1 was measured and the results are shown in FIG. 4.

As apparent from FIG. 4, the fuel cell of Example 11 has an increased energy density compared to the fuel cell of Comparative Example 1. In FIG. 4, A (Nafion 115) is a graph showing a change in current depending on time when applying the MEA using Nafion 115 to a fuel cell, B (nanocomposite membrane) is a graph showing a change in current depending on time when applying the MEA using a nanocomposite membrane to a fuel cell, C (Nafion 115) is a graph showing a change in power of the MEA using Nafion 115 depending on time, and D (nanocomposite membrane) is a graph showing a change in power of the MEA using a nanocomposite membrane depending on time.

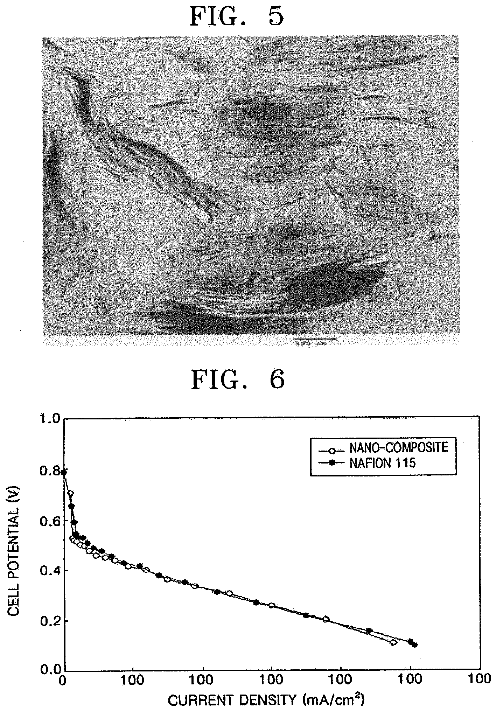

The distribution state of the nanocomposite membrane used in Example 11 was investigated using TEM and the result is shown in FIG. 5.

From FIG. 5, the intercalation and exfoliation of the montmorillonite which is an inorganic material can be observed through a morphology of the polymer membrane.

In addition, the performance of the MEAs prepared in Example 11 and Comparative Example 1 was investigated and the results are shown in FIG. 6.

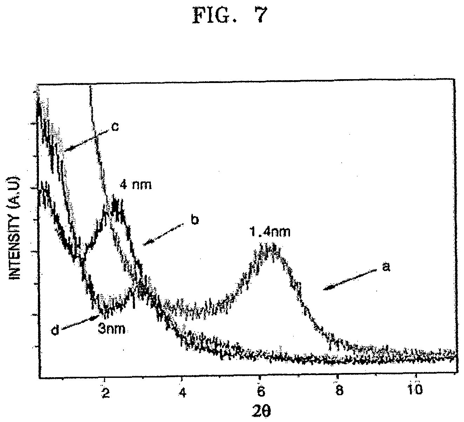

The distribution state of the nanocomposite membrane used in Example 11 was investigated using XRD and the result is shown in FIG. 7. In FIG. 7, a represents a distribution state of montmorillonite, and b, c and d represent distribution states of polymer nanocomposite membranes formed by using montmorillonite. As apparent from FIG. 7, the interlayer distance of an inorganic material in a polymer nanocomposite membrane formed by using montmorillonite is wider than the interlayer distance of montmorillonite.

In a polymer nanocomposite membrane according to another embodiment of the present invention, conductive polymers are intercalated to a hydrogen ionic conductive inorganic material having a layered structure or products exfoliated from a hydrogen ionic conductive inorganic material having a layered structure are dispersed in a conductive polymer. The polymer nanocomposite membrane according to the present invention can control the degree of swelling in a methanol solution, thereby decreasing the permeability depending on the degree of swelling. Furthermore, a functional group having a hydrogen ionic conductivity is introduced in the inorganic material having a layered structure, thereby increasing a hydrogen ionic conductivity of the polymer nanocomposite membrane. Furthermore, when the polymer nanocomposite membrane is used as a hydrogen ionic conductive membrane in a fuel cell, the energy density and the efficiency of the fuel cell can be improved.

## Claims

1. A hydrogen ionic conductive inorganic material having a layered structure, wherein a moiety containing a functional group with hydrogen ionic conductivity is introduced between layers of the inorganic material having a nano-sized interlayer distance, wherein the moiety is a sulfonic acid group containing moiety, which is a silicate connected to the inorganic material through an ether bond (-O-),
wherein the sulfonic acid group containing moiety is obtained by acid-treatment of the ionic conductive inorganic material having the layered structure and reacting the acid-treated ionic conductive inorganic material having the layered structure with an alkoxysilane having a free thiol group at a terminal to form a silicate connected to the inorganic material through an ether bond and having a free thiol group at a terminal, and by oxidation and subsequent protonation of the free thiol group of the silicate to form the sulfonic acid group,
wherein:
the alkoxysilane is at least one selected from 3-mercaptopropyl trimethoxysilane and 3-mercaptopropylmethyldimethoxysilane; and
the hydrogen ionic conductive inorganic material has a layered structure, wherein the inorganic material is at least one selected from montmorillonite, hydrated sodium calcium aluminum magnesium silicate hydroxide, pyrophyllite, talc, vermiculite, sauconite, saponite, nontronite, Amesite, Baileychlore, Chamosite, Clinochlore, Cookeite, Corundophilite, Daphnite, Delessite, Gonyerite, Nimite, Odinite, Orthochamosite, Penninite, Pannantite, Rhipidolite, prochlore, Sudoite, Thuringite, kaolinite, dickite, and nacrite.

2. The hydrogen ionic conductive inorganic material having a layered structure according to claim 1, wherein the interlayer distance of the inorganic material having a nano-sized interlayer distance is in the range of 0.1-10 nm.

3. The hydrogen ionic conductive inorganic material having a layered structure according to claim 1 or 2, further comprising a surfactant.

4. The hydrogen ionic conductive inorganic material having a layered structure according to claim 3, wherein the surfactant is at least one selected from dodecylamine, cetyltrimethylammonium bromide, dodecyltrimethylammonium bromide, and tetrabutylammonium hydroxide.

5. The hydrogen ionic conductive inorganic material having a layered structure according to any of claims 1 to 4, wherein the interlayer distance of the hydrogen ionic conductive inorganic material is in the range of 0.1-50 nm.

6. A method of preparing a hydrogen ionic conductive inorganic material having a layered structure, the method comprising:
reacting an inorganic material having nano-sized interlayer distance with an alkoxysilane containing a hydrolysable alkoxy group and a free thiol group to form a a silicate connected to the inorganic material through an ether bond (-O-) that has a free thiol group at a terminal, wherein the alkoxysilane is at least one selected from 3-mercaptopropyl trimethoxysilane and 3-mercaptopropylmethyldimethoxysilane; and
conducting an oxidation by adding an oxidizing agent to the reaction product, followed by a protonation in order to convert the free thiol group onto a sulfonic acid group,
wherein the inorganic material is at least one selected from montmorillonite, hydrated sodium calcium aluminum magnesium silicate hydroxide, pyrophyllite, talc, vermiculite, sauconite, saponite, nontronite, Amesite, Baileychlore, Chamosite, Clinochlore, Cookeite, Corundophilite, Daphnite, Delessite, Gonyerite, Nimite, Odinite, Orthochamosite, Penninite, Pannantite, Rhipidolite, prochlore, Sudoite, Thuringite, kaolinite, dickite, and nacrite.

7. The method of preparing a hydrogen ionic conductive inorganic material having a layered structure according to claim 6, further comprising adding a surfactant to the inorganic material having a nano-sized interlayer distance, before reacting the inorganic material having nano-sized interlayer distance with the alkoxysilane.

8. The method of preparing a hydrogen ionic conductive inorganic material having a layered structure according to claim 7, wherein the surfactant is at least one selected from dodecylamine, cetyltrimethylammonium bromide, dodecyltrimethylammonium bromide, and tetrabutylammonium hydroxide.

9. The method of preparing a hydrogen ionic conductive inorganic material having a layered structure according to any of claims 6 to 8, wherein the temperature of the above reaction is in the range of 60-150°C.

10. The method of preparing a hydrogen ionic conductive inorganic material having a layered structure according to claim 6, wherein the oxidizing agent is one of H₂O₂, K₂O₂, or BaO₂.

11. The method of preparing a hydrogen ionic conductive inorganic material having a layered structure according to any of claims 6 to 10, wherein the oxidation reaction temperature of the oxidation is in the range of 25-60°C.

12. The method of preparing a hydrogen ionic conductive inorganic material having a layered structure according to any of claims 6 to 11, wherein one of a sulfuric acid, a phosphoric acid, and an acetic acid is used in the protonation.

13. A polymer nanocomposite membrane comprising a reaction product of a hydrogen ionic conductive inorganic material having a layered structure according to any one of claims 1-5 and a conductive polymer.

14. The polymer nanocomposite membrane according to claim 13, wherein a conductive polymer is intercalated between layers of a hydrogen ionic conductive inorganic material, products exfoliated from each layer of a hydrogen ionic conductive inorganic material are dispersed in the conductive polymer, or above structures are coexistent.

15. The polymer nanocomposite membrane according to claim 13 or 14, wherein the conductive polymer is at least one selected from perfluorinated sulfonic acid polymer, sulfonated polyimide, sulfonated polyetherketone, sulfonated polystyrene, and sulfonated polysulfone.

16. The polymer nanocomposite membrane according to any of claims 13 to 15, wherein the amount of the conductive polymer is in the range of 3-20 parts by weight based on 100 parts by weight of the hydrogen ionic conductive inorganic material.

17. A method of preparing a polymer nanocomposite membrane, the method comprising reacting a mixture of a hydrogen ionic conductive inorganic material having a layered structure obtained by the method of any of claims 6-12 and a conductive polymer at the temperature of 60-150°C, followed by forming the membrane.

18. The method of preparing the polymer nanocomposite membrane of claim 17, wherein the formation of the membrane is carried out by locating the reaction product of the mixture of the hydrogen ionic conductive inorganic material and the conductive polymer in a frame for polymer membrane and maintaining it in an oven kept at the temperature of 40-150°C.

19. A fuel cell comprising a polymer nanocomposite membrane according to any of claims 13-16.

20. The fuel cell of claim 19, wherein the fuel cell is a direct methanol fuel cell.

## Patentansprüche

1. Wasserstoff-Ionen-leitende anorganische Substanz mit einer Lagenstruktur, wobei ein Teil, der eine funktionelle Gruppe mit Wasserstoff-Ionen-Leitfähigkeit aufweist, zwischen Lagen der anorganischen Substanz mit einem Lagenzwischenabstand in Nanogröße eingefügt ist, wobei der Teil ein Teil ist, der eine Sulfonsäuregruppe enthält, die ein Silikat ist, das über eine Etherbindung (-O-) mit der anorganischen Substanz verbunden ist;
wobei der eine Sulfonsäuregruppe enthaltende Teil erhalten wird durch Säurebehandlung der Ionen-leitenden anorganischen Substanz mit der Lagenstruktur und Reagieren der mit Säure behandelten Ionen-leitenden anorganischen Substanz mit der Lagenstruktur mit einem Alkoxysilan mit einer freien Thiolgruppe an einem Ende, um ein Silikat zu bilden, das über eine Etherbindung mit der anorganischen Substanz verbunden ist und mit einer freien Thiolgruppe an einem Ende sowie durch Oxidation und folgende Protonierung der freien Thiolgruppe des Silikats, um die Sulfonsäuregruppe zu bilden;
wobei:
das Alkoxysilan wenigstens ausgewählt ist aus 3-Mercaptopropyltrimethoxysilan oder 3-Mercaptopropylmethyldimethoxysilan; und
die Wasserstoff-Ionen-leitende anorganische Substanz eine Lagenstruktur aufweist, wobei die anorganische Substanz wenigstens eine Substanz ist, die ausgewählt ist aus Montmorillonit, hydriertem Natrium-Kalzium-Aluminium-Magnesium-Silikathydroxid, Pyrophyllit, Talk, Vermiculit, Sauconit, Saponit, Nontronit, Amesit, Baileychlor, Chamosit, Clinochlor, Cookeit, Corundophilit, Daphnit, Delessit, Gonyerit, Nimit, Odinit, Orthochamosit, Penninit, Pannantit, Rhipidolit, Prochlor, Sudoit, Thuringit, Kaolinit, Dickit und Nacrit.

2. Wasserstoff-Ionen-leitende anorganische Substanz mit einer Lagenstruktur nach Anspruch 1, wobei der Lagenzwischenabstand der anorganischen Substanz mit einem Lagenzwischenabstand in Nanogröße im Bereich von 0,1 bis 10 nm liegt.

3. Wasserstoff-Ionen-leitende anorganische Substanz mit einer Lagenstruktur nach Anspruch 1 oder 2, ferner ein Tensid umfassend.

4. Wasserstoff-Ionen-leitende anorganische Substanz mit einer Lagenstruktur nach Anspruch 3, wobei das Tensid wenigstens ein Tensid ist, das ausgewählt ist aus Dodecylamin, Cetyltrimethylammoniumbromid, Dodecyltrimethylammoniumbromid und Tetrabutylammoniumhydroxid.

5. Wasserstoff-Ionen-leitende anorganische Substanz mit einer Lagenstruktur nach einem der Ansprüche 1 bis 4, wobei der Lagenzwischenabstand der Wasserstoff-Ionen-leitenden anorganischen Substanz im Bereich von 0,1 bis 50 nm liegt.

6. Verfahren zur Herstellung einer Wasserstoff-Ionen-leitenden anorganischen Substanz mit einer Lagenstruktur, wobei das Verfahren folgendes umfasst:
Reagieren einer anorganischen Substanz mit einem Lagenzwischenabstand in Nanogröße mit einem Alkoxysilan, das eine hydrolysierbare Alkoxygruppe und eine freie Thiolgruppe aufweist, um ein Silikat zu bilden, das mit der anorganischen Substanz über eine Etherbindung (-O-) verbunden ist, die eine freie Thiolgruppe an einem Ende aufweist, wobei das Alkoxysilan wenigstens ausgewählt ist aus 3-Mercaptopropyltrimethoxysilan oder 3-Mercaptopropylmethyldimethoxysilan; und
Ausführen einer Oxidation durch Zugabe eines Oxidationsmittels zu dem Reaktionsprodukt, gefolgt von einer Protonierung zur Umwandlung der freien Thiolgruppe auf ein Sulfonsäuregruppe;
wobei die anorganische Substanz wenigstens eine Substanz ist, die ausgewählt ist aus Montmorillonit, hydriertem Natrium-Kalzium-Aluminium-Magnesium-Silikathydroxid, Pyrophyllit, Talk, Vermiculit, Sauconit, Saponit, Nontronit, Amesit, Baileychlor, Chamosit, Clinochlor, Cookeit, Corundophilit, Daphnit, Delessit, Gonyerit, Nimit, Odinit, Orthochamosit, Penninit, Pannantit, Rhipidolit, Prochlor, Sudoit, Thuringit, Kaolinit, Dickit und Nacrit.

7. Verfahren zur Herstellung einer Wasserstoff-Ionen-leitenden anorganischen Substanz mit einer Lagenstruktur nach Anspruch 6, ferner umfassend die Zugabe eines Tensids zu der anorganischen Substanz mit einem Lagenzwischenabstand in Nanogröße bevor die anorganische Substanz mit Lagenzwischenabstand in Nanogröße mit dem Alkoxysilan in Reaktion gebracht wird.

8. Verfahren zur Herstellung einer Wasserstoff-Ionen-leitenden anorganischen Substanz mit einer Lagenstruktur nach Anspruch 7, wobei das Tensid wenigstens ein Tensid ist, das ausgewählt ist aus Dodecylamin, Cetyltrimethylammoniumbromid, Dodecyltrimethylammoniumbromid und Tetrabutylammoniumhydroxid.

9. Verfahren zur Herstellung einer Wasserstoff-Ionen-leitenden anorganischen Substanz mit einer Lagenstruktur nach einem der Ansprüche 6 bis 8, wobei die Temperatur der obigen Reaktion im Bereich von 60 bis 150 °C liegt.

10. Verfahren zur Herstellung einer Wasserstoff-Ionen-leitenden anorganischen Substanz mit einer Lagenstruktur nach Anspruch 6, wobei das Oxidationsmittel H₂O₂, K₂O₂ oder BaO₂ ist.

11. Verfahren zur Herstellung einer Wasserstoff-Ionen-leitenden anorganischen Substanz mit einer Lagenstruktur nach einem der Ansprüche 6 bis 10, wobei die Oxidationsreaktionstemperatur der Oxidation im Bereich von 25 bis 60 °C liegt.

12. Verfahren zur Herstellung einer Wasserstoff-Ionen-leitenden anorganischen Substanz mit einer Lagenstruktur nach einem der Ansprüche 6 bis 11, wobei bei der Protonierung Schwefelsäure, Phosphorsäure oder Essigsäure verwendet wird.

13. Polymere Nanokompositmembran, umfassend ein Reaktionsprodukt einer Wasserstoff-Ionen-leitenden anorganischen Substanz mit einer Lagenstruktur nach einem der Ansprüche 1 bis 5 und ein leitfähiges Polymer.

14. Polymere Nanokompositmembran nach Anspruch 13, wobei ein leitfähiges Polymer eingefügt ist zwischen Lagen einer Wasserstoff-Ionen-leitenden anorganischen Substanz, wobei von jeder Lage einer Wasserstoff-Ionen-leitenden anorganischen Substanz abgeschälte Produkte verteilt sind in dem leitfähigen Polymer, oder wobei die obigen Strukturen nebeneinander existieren.

15. Polymere Nanokompositmembran nach Anspruch 13 oder 14, wobei das leitfähige Polymer wenigstens ein Polymer ist, das ausgewählt ist aus perfluoriertem Sulfonsäurepolymer, sulfoniertem Polyimid, sulfoniertem Polyetherketon, sulfoniertem Polystyrol und sulfoniertem Polysulfon.

16. Polymere Nanokompositmembran nach einem der Ansprüche 13 bis 15, wobei die Menge des leitfähigen Polymers im Bereich von 3 bis 20 Gewichtsteilen auf der Basis von 100 Gewichtsteilen der Wasserstoff-Ionen-leitenden anorganischen Substanz liegt.

17. Verfahren zur Herstellung einer polymeren Nanokompositmembran, wobei das Verfahren das Reagieren eines Gemischs aus einer Wasserstoff-Ionen-leitenden anorganischen Substanz mit einer Lagenstruktur, erhalten durch das Verfahren nach einem der Ansprüche 6 bis 12, und eines leitfähigen Polymers auf einer Temperatur zwischen 60 und 150 °C gefolgt durch das Bilden der Membran umfasst.

18. Verfahren zur Herstellung einer polymeren Nanokompositmembran nach Anspruch 17, wobei die Bildung der Membran ausgeführt wird durch Platzieren des Reaktionsprodukts des Gemischs der Wasserstoff-Ionen-leitenden anorganischen Substanz und des leitfähigen Polymers in einem Rahmen für eine Polymermembran und Halten in einem Ofen, der auf einer Temperatur zwischen 40 und 150 °C gehalten wird.

19. Brennstoffzelle, umfassend eine polymere Nanokompositmembran nach einem der Ansprüche 13 bis 16.

20. Brennstoffzelle nach Anspruch 19, wobei die Brennstoffzelle eine Direktmethanolbrennstoffzelle ist.

## Revendications

1. Matériau inorganique conducteur ionique d'hydrogène ayant une structure en couches, où une fraction contenant un groupe fonctionnel avec une conductivité ionique d'hydrogène est introduite entre les couches du matériau inorganique d'une distance intercouche de taille nanométrique, où la fraction est une fraction contenant un groupe d'acides sulfoniques, qui est un silicate relié au matériau inorganique par une liaison d'éther (-0-),
où la fraction contenant un groupe d'acides sulfoniques est obtenue par traitement acide du matériau inorganique conducteur ionique présentant la structure en couches et mettant en réaction le matériau inorganique conducteur ionique traité par un acide et présentant la structure en couches avec un alkoxysilane ayant un groupe thiol libre à une terminaison pour former un silicate relié au matériau inorganique par une liaison d'éther et présentant un groupe thiol libre à une terminaison, et par oxydation et protonation subséquente du groupe thiol libre du silicate pour former le groupe d'acides sulfoniques,
où :
l'alkoxysilane est au moins un élément choisi parmi le 3-mercaptopropyle triméthoxysilane et le 3-mercaptopropylméthyle diméthoxysilane ; et
le matériau inorganique conducteur ionique d'hydrogène présente une structure en couches, où le matériau inorganique est au moins un élément choisi parmi la montmorillonite, l'hydroxyde de silicate de sodium calcium aluminium magnésium hydraté, le pyrophyllite, le talc, la vermiculite, la sauconite, la saponite, la nontronite, l'Amesite, le Baileychlore, la Chamosite, le Clinochlore, la Cookeite, la Corundophilite, la Daphnite, la Delessite, la Gonyerite, la Nimite, l'Odinite, l'Orthochamosite, la Penninite, la Pannantite, la Rhipidolite, le prochlore, la Sudoite, la Thuringite, la kaolinite, la dickite et la nacrite.

2. Matériau inorganique conducteur ionique d'hydrogène ayant une structure en couches selon la revendication 1, où la distance intercouche du matériau inorganique d'une distance intercouche de taille nanométrique est comprise dans la fourchette de 0,1 à 10 nm.

3. Matériau inorganique conducteur ionique d'hydrogène présentant une structure en couches selon les revendications 1 ou 2, comprenant en outre un tensioactif.

4. Matériau inorganique conducteur ionique d'hydrogène présentant une structure en couches selon la revendication 3, où le tensioactif est au moins un élément choisi parmi la dodécylamine, le bromure de cétyltriméthylammonium, le bromure de dodécyltriméthyle ammonium et l'hydroxyde de tétrabutylammonium.

5. Matériau inorganique conducteur ionique d'hydrogène présentant une structure en couches selon l'une quelconque des revendications 1 à 4, où la distance intercouche du matériau inorganique conducteur ionique d'hydrogène est comprise dans la fourchette de 0,1 à 50 nm.

6. Procédé de préparation d'un matériau inorganique conducteur ionique d'hydrogène présentant une structure en couches, le procédé comprenant :
la mise en réaction d'un matériau inorganique présentant une distance intercouche de taille nanométrique avec un alkoxysilane contenant un groupe alkoxy hydrolysable et un groupe thiol libre pour former un silicate relié au matériau inorganique par l'intermédiaire d'une liaison d'éther (-0-) qui possède un groupe thiol libre à une terminaison, où l'alkoxysilane est au moins un élément choisi parmi le 3-mercaptopropyl triméthoxysilane et le 3-mercaptopropylméthyle diméthoxysilane; et
la réalisation d'une oxydation par addition d'un agent oxydant au produit de réaction, suivie d'une protonation pour transformer le groupe thiol libre en un groupe d'acides sulfoniques,
où le matériau inorganique est au moins un élément choisi parmi la montmorillonite, l'hydroxyde de silicate de sodium calcium aluminium magnésium hydraté, le pyrophyllite, le talc, la vermiculite, la sauconite, la saponite, la nontronite, l'Amesite, le Baileychlore, la Chamosite, le Clinochlore, la Cookeite, la Corundophilite, la Daphnite, la Delessite, la Gonyerite, la Nimite, l'Odinite, l'Orthochamosite, la Penninite, la Pannantite, la Rhipidolite, le prochlore, la Sudoite, la Thuringite, la kaolinite, la dickite et la nacrite.

7. Procédé de préparation d'un matériau inorganique conducteur ionique d'hydrogène présentant une structure en couches selon la revendication 6, comprenant en outre l'addition d'un tensioactif au matériau inorganique d'une distance intercouche de taille nanométrique, avant la mise en réaction du matériau inorganique d'une distance de taille nanométrique avec l'alkoxysilane.

8. Procédé de préparation d'un matériau inorganique conducteur ionique d'hydrogène présentant une structure en couches selon la revendication 7, où le tensioactif est au moins un élément choisi parmi la dodécylamine, le bromure de cétyltriméthylammonium, le bromure de dodécyltriméthyle ammonium et l'hydroxyde de tétrabutylammonium.

9. Procédé de préparation d'un matériau inorganique conducteur ionique d'hydrogène présentant une structure en couches selon l'une quelconque des revendications 6 à 8, où la température de la réaction ci-dessus est comprise dans la fourchette de 60 à 150°C.

10. Procédé de préparation d'un matériau inorganique conducteur ionique d'hydrogène présentant une structure en couches selon la revendication 6, où l'agent oxydant est l'un de H₂O₂, K₂O₂ ou BaO₂.

11. Procédé de préparation d'un matériau inorganique conducteur ionique d'hydrogène présentant une structure en couches selon l'une quelconque des revendications 6 à 10, où la température de réaction d'oxydation de l'oxydation est comprise dans la fourchette de 25 à 60°C.

12. Procédé de préparation d'un matériau inorganique conducteur ionique d'hydrogène présentant une structure en couches selon l'une quelconque des revendications 6 à 11, où l'un des acides parmi l'acide sulfurique, l'acide phosphorique et l'acide acétique est utilisé dans la protonation.

13. Membrane nanocomposite polymère comprenant un produit de réaction d'un matériau inorganique conducteur ionique d'hydrogène présentant une structure en couches selon l'une quelconque des revendications 1 à 5 et un polymère conducteur.

14. Membrane nanocomposite polymère selon la revendication 13, où un polymère conducteur est intercalé entre des couches d'un matériau inorganique conducteur ionique d'hydrogène, où des produits exfoliés de chaque couche d'un matériau inorganique conducteur ionique d'hydrogène sont dispersés dans le polymère conducteur, ou bien les structures ci-dessus sont coexistantes.

15. Membrane nanocomposite polymère selon la revendication 13 ou 14, où le polymère conducteur est au moins un élément choisi parmi un polymère d'acide sulfonique perfluoré, un polyimide sulfoné, un polyéthercétone sulfoné, un polystyrène sulfoné et un polysulfone sulfoné.

16. Membrane nanocomposite polymère selon l'une quelconque des revendications 13 à 15, où la quantité du polymère conducteur est comprise dans la fourchette de 3 à 20 parties en poids sur la base de 100 parties en poids du matériau inorganique conducteur ionique d'hydrogène.

17. Procédé de préparation d'une membrane nanocomposite polymère, le procédé consistant à mettre en réaction un mélange d'un matériau inorganique conducteur ionique d'hydrogène présentant une structure en couches obtenue par le procédé selon l'une quelconque des revendications 6-12 et un polymère conducteur à la température de 60 à 150°C, suivi de la formation de la membrane.

18. Procédé de préparation de la membrane nanocomposite polymère selon la revendication 17, où la formation de la membrane est effectuée en plaçant le produit de réaction du mélange du matériau inorganique conducteur ionique d'hydrogène et du polymère conducteur dans un cadre pour membrane polymère et en le conservant dans un four maintenu à la température de 40 à 150°C.

19. Pile à combustible comprenant une membrane nanocomposite polymère selon l'une quelconque des revendications 13 à 16.

20. Pile à combustible selon la revendication 19, où la pile à combustible est une pile à combustible à méthanol directe.
